# EUROPEAN PATENT SPECIFICATION

(11) **EP 1 472 087 B1**
(45) Date of publication and mention of the grant of the patent: **19.04.2006**
(21) Application number: 03705995.3
(22) Date of filing: 30.01.2003
(51) Int. Cl.: B32B 27/32

(54) **CONTAINER WALL POST-FORMING**
BEHÄLTERWANDNACHVERFORMUNG
POST-FORMAGE DE PAROI DE CONTENANT

(30) Priority: 04.02.2002 US 354182 P
(43) Date of publication of application: 03.11.2004
(73) Proprietor: Colgate-Palmolive Company, New York, N.Y. 10022 (US)
(72) Inventor: SERRANO, Adolfo, Piscataway, NJ 08854 (US)
(74) Representative: UEXKÜLL & STOLBERG
(86) International application number: PCT/US2003/002812
(87) International publication number: WO 2003/066320

(56) References cited:
- EP-A- 0 514 223
- US-A- 4 659 408
- US-A- 5 756 038
- DATABASE WPI Section Ch, Week 198124 Derwent Publications Ltd., London, GB; Class A32, AN 1981-43277D XP002240689 & JP 56 020970 B (SHISEIDO CO LTD), 16 May 1981 (1981-05-16) cited in the application

## Description

### Field Of The Invention

This invention relates to a method of past-forming a tube container where the shape of at least part of the structure of the walls is changed. More particularly, this invention relates to a method of past-forming a tube where the shape of the tube container is changed after the formation of the tube.

### Background Of The Invention

In most instances the container is given its final shape at the time that it is manufactured. However, in some instances the container shape is modified after the container is made. This is to provide the container with some utilitarian feature or to provide a decoration. It has been found that a post forming technique is very useful for adding features or decoration to tube containers.

Japanese Patent Publication 56-20970 discloses a technique for modifying the shape of tube containers by means of placing the tube on a heated mandrel and blowing the tube wall to the shape of a surround mold. This modifies the tube wall. The heated mandrel is removed, the mold opened and the tube with an altered surface removed. U.S. Patent 5,756,038 discloses a modification of this process where the mandrel has recesses and a vacuum is shown on the mandrel and/or is blown from the surrounding mold. The tube wall takes the shape of the mandrel recesses. The tube then is stripped from the mandrel recesses. These are interesting processes for making post-formed tubes. However, neither process takes into account tube walls that have a barrier layer. Such a barrier layer is part of a laminate or injection blowmolded tube. In situations where the barrier layer is for organic substances such as flavors or fragrances, it will be a metal layer, such as an aluminum layer or an organic layer, such as an ethylene vinylalcohol (EVOH) layer. In the alteration of the shape of a tube wall it is important that the barrier layer of the tube wall not be breached.

EP 0 514 223 Al discloses post-forming of a tubular article, wherein the wall of the tube consists of a barrier layer and one external protective layer.

It is an object of the present invention to provide a method of post-forming a tube container achieving an improved structural stability of the laminate wall to permit to put decorative and/or functional features onto the container walls.

The method of the present invention is defined in claim 1.

The invention is directed to the post-forming of containers, such as tube containers, where the container structure contains a barrier layer for moisture and/or organics. Organic barriers are usually directed to preclude the passing of flavors and fragrances through a container wall. These barriers are foils that are a part of a multilayer container wall and can be either organic or inorganic foils, such as aluminum or ethylene vinylalcohol foils. However, in the post-forming this barrier foil layer cannot be breached. This barrier foil layer must remain continuous, and continuous is a sufficiently thick layer to be an effective barrier after any post-forming. The metal or metal alloy of any inorganic barrier must have a sufficient ductility that the metal can spread and thin without any breaches. Likewise, for an organic barrier it must be able to thin, yet retain a sufficient thickness to provide an effective barrier. For a metal foil barrier layer the metal foils can initially be about 7 microns to about 50 microns, and preferably about 10 microns to 25 microns. This can be stretched about 1% to about 25%. More highly ductile materials can be subject to a greater degree of stretching. For an organic foil it can initially be about 5 microns to about 50 microns, and preferably about 10 microns to about 25 microns, and can be stretched about 1% to about 100% and retain effective barrier properties.

### Brief Description Of The Drawings

Figure 1 is a cross-section of a typical container wall having a metal foil layer.
Figure 2 is a cross-section of a typical container wall having an organic foil layer.

### Detailed Description Of The Invention

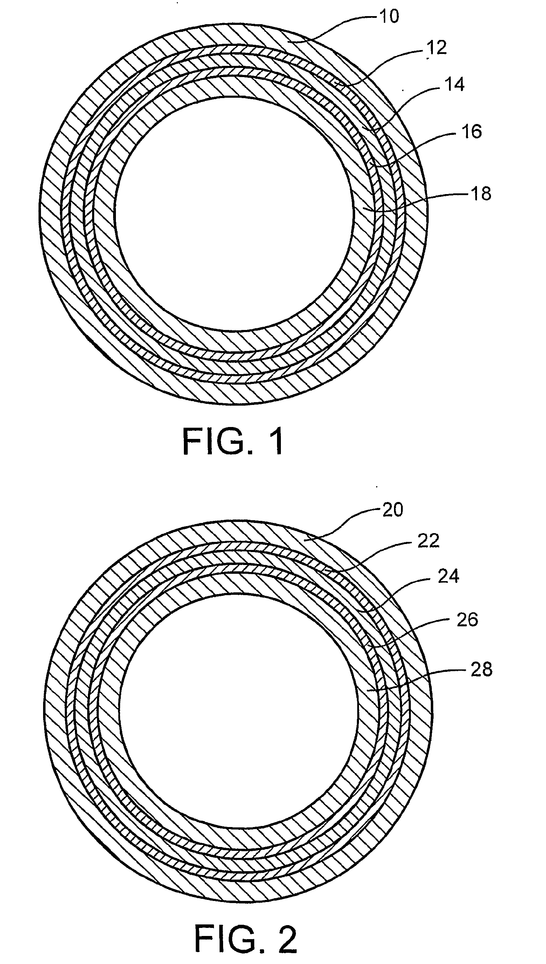

The post-forming of containers while maintaining the barrier properties of the container walls will now be described in more detail. Figures 1 and 2 describe the wall of typical containers having barrier walls. These container walls are formed from a laminate material or are formed by extrusion blowmolding. If the wall contains a metal foil it will be formed from a laminate material.

Although the present invention is applicable to any container, it is particularly applicable to tube containers.

Figure 1 shows a foil laminate wall of a tube container. The foil is comprised of an outer polyethylene layer 10, adhesive layer 12, an aluminum foil layer 14, an adhesive layer 16, and an inner polyethylene layer 18. The outer polyethylene layer 10 will have a thickness of about 50 microns to about 250 microns, the inner aluminum foil layer 14 a. thickness of about 7 microns to about 50 microns, and the inner polyethylene layer 18 thickness of about 50 microns to about 250 microns. The adhesive layers 12, 16 are any suitable adhesive such as ethyl acrylate copolymers, maleic anhydride modified copolymers and terpolymers, acrylic acid modified polyolefins, and ethyl methyl acrylate copolymers. The adhesives will have a thickness of about 0.25 microns to about 10 microns. The ductility of the aluminum or aluminum alloy or other metal will be about 1% to 25% and preferably about 8% to 15%. This material can be stretched about 1% to about 25% without any breach of the aluminum foil layer.

Figure 2 shows a typical container wall comprising an organic barrier layer 24. This organic barrier layer can be any of ethylene, vinylalcohol copolymers, polyamides, polyesters, PVDC, ClCF₃ (Aclar)®, Barex®, and nano composites and liquid crystal polymers and blends. There will be an exterior layer of polyolefin 20 adhesive layer 22 the organic film an exterior layer 24, and an inner polyethylene layer 28. The adhesive will be any suitable adhesive such as any of the above described adhesives. The outer polyolefin layer 20 will have a thickness of about 50 microns to about 250 microns, and preferably about 75 microns to about 200 microns. The organic barrier layer 24 will be of a thickness of about 5 microns to about 50 microns, and preferably about 15 microns to about 30 microns. The inner polyolefin 28 layer will have a thickness of about 50 microns to about 250 microns, and preferably about 75 microns to about 200 microns. These container walls can be from a laminate or can be formed by extrusion blowmolding. The container wall having this structure can be stretched about 1% to about 100%. This is greater than when a metal foil is used as the barrier layer.

It was found that a laminate structure having a 25 micron ethylene vinyl alcohol barrier had equivalent to slightly improved barrier properties after stretching. It is theorized that the stretching induces orientation into the ethylene vinyl alcohol film whereby although thinned, it maintains or has slightly improved barrier properties with regard to flavors. This was not expected with the opinion being that stretching the film would have a deleterious effect.

The container wall stretching by post-forming techniques will put decorative and/or functional features onto the container wall. The techniques that can be used are those described in Japanese Patent Publication 56-20970 and U.S. Patent 5,756,038 which are incorporated herein by reference. Further, in a modification of the technique in Japanese Patent Publication 56-20970, the container wall can be modified solely by a vacuum drawn on the mold sections or by a vacuum drawn on the mold sections and a pressure blowing from the mandrel to provide a positive pressure in the mold. In any of these techniques the container wall will be formed to have a stiffening shape. A third technique involves the mechanical stamping of the tube wall. This uses a mold with an expandable mandrel. The container is heated and is put into the mold and the expandable mandrel into the container. Upon actuation the expandable mandrel then pushes the walls of the container against the inner surface of the mold, forming the surface features desired on the exterior surface of the container (see attached drawing of mandrel).

The containers that are suitable for post-forming are those that will contain a toothpaste, a lotion, a gel product, food products, lubricants, medicants and the like. The structures that can be post-formed onto tubes include grips and various decorations. For instance, a figure of a person or animal that is pictured on a tube also can be raised to form a more decorative tube container.

## Claims

1. A method of post-forming a tube container to a different shape and maintaining the barrier properties of said tube container comprising providing a multilayer laminate tube having at least one barrier layer and at least one thermoplastic layer on each side of said barrier layer, changing at least part of the structure of the walls said barrier layer being elongatable up to about 125% of its length whereby said barrier layer maintains at least about 90% of its barrier properties.

2. A method as in claim 1 wherein said barrier layer is a metal layer.

3. A method as in claim 2 wherein said metal is aluminum.

4. A method as in claim 2 wherein said metal is an aluminum alloy.

5. A method as in claim 2 wherein said metal is a metal film having a thickness of about 7 microns to about 50 microns.

6. A method as in claim 2 wherein each thermoplastic layer is a polyolefin.

7. A method as in claim 6 wherein said polyolefin is selected from the group consisting of polyethylenes and polypropylenes.

8. A method as in claim 1 wherein said barrier layer is an organic barrier layer.

9. A method as in claim 8 wherein said organic barrier layer is a thermoplastic.

10. A method as in claim 9 wherein said thermoplastic is selected from the group consisting of polyamides, polyesters, vinyl alcohol polymers and copolymers, vinyl acetate polymers, vinyl chloride polymers and copolymers, vinylidene chloride polymers and copolymers, and liquid crystal polymers.

11. A method as in claim 8 wherein said organic barrier layer has a thickness of about 5 microns to about 50 microns.

12. A method as in any preceeding claim, wherein the structures that are post-formed in at least part of the walls include grips.

13. A method as in any preceeding claim, wherein the structures that are post-formed in at least part of the walls include decorations.

## Patentansprüche

1. Verfahren zur Nachverformung eines Tubenbehälters in eine andere Form und Erhalten der Sperreigenschaften des Tubenbehälters, wobei eine mehrschichtige Laminattube mit wenigstens einer Sperrschicht und wenigstens einer thermoplastischen Schicht auf jeder Seite der Sperrschicht bereitgestellt wird, wenigstens ein Teil der Struktur der Wand verändert wird, wobei die Sperrschicht bis zu etwa 125 % ihrer Länge ausdehnbar ist, wobei die Sperrschicht wenigstens etwa 90 % ihrer Sperreigenschaften beibehält.

2. Verfahren nach Anspruch 1, wobei die Sperrschicht eine Metallschicht ist.

3. Verfahren nach Anspruch 2, wobei das Metall Aluminium ist.

4. Verfahren nach Anspruch 2, wobei das Metall eine Aluminiumlegierung ist.

5. Verfahren nach Anspruch 2, wobei das Metall eine Metallfolie mit einer Dicke von etwa 7 µm bis etwa 50 µm ist.

6. Verfahren nach Anspruch 2, wobei die thermoplastische Schicht eine Polyolefin ist.

7. Verfahren nach Anspruch 6, wobei das Polyolefin aus der Gruppe bestehend aus Polyethylenen und Polyproylenen ausgewählt ist.

8. Verfahren nach Anspruch 1, wobei die Sperrschicht eine organische Sperrschicht ist.

9. Verfahren nach Anspruch 8, wobei die organische Sperrschicht ein thermoplastischer Kunststoff ist.

10. Verfahren nach Anspruch 9, wobei der thermoplastische Kunststoff aus der Gruppe bestehend aus Polyamiden, Polyestern, Vinylalkoholpolymeren und Copolymeren, Vinylacetatpolymeren, Vinylchloridpolymeren und Copolymeren, Vinylidenchloridpolymeren und Copolymeren und Flüssigkristallpolymeren ausgewählt ist.

11. Verfahren nach Anspruch 8, wobei die organische Sperrschicht eine Dicke von etwa 5 µm bis etwa 50 µm hat.

12. Verfahren nach einem der vorhergehenden Ansprüche, wobei die Strukturen, die in wenigstens einem Teil der Wände nachverformt werden, Griffe umfassen.

13. Verfahren nach einem der Vorhergehenden Ansprüche, wobei die Strukturen, die in wenigstens einem Teil der Wände nachverformt werden, Dekorationen umfassen.

## Revendications

1. Procédé de post-formage d'un conteneur en forme de tube pour lui donner une forme différente et maintenir les propriétés de barrière dudit conteneur en forme de tube, consistant à prévoir un tube laminé multicouche comportant au moins une couche formant barrière et au moins une couche thermoplastique de chaque côté de ladite couche formant barrière, modifier au moins une partie de la structure des parois, ladite couche formant barrière pouvant être allongée jusqu'à environ 125 % de sa longueur, ce qui a pour effet que ladite couche formant barrière conserve au moins environ 90 % de ses propriétés de barrière.

2. Procédé selon la revendication 1, selon lequel ladite couche formant barrière est une couche métallique.

3. Procédé selon la revendication 2, selon lequel ledit métal est de l'aluminium.

4. Procédé selon la revendication 2, selon lequel ledit métal est un alliage d'aluminium.

5. Procédé selon la revendication 2, selon lequel ledit métal est un film métallique possédant une épaisseur d'environ 7 micromètres à environ 50 micromètres.

6. Procédé selon la revendication 2, selon lequel chaque couche thermoplastique est formée d'une polyoléfine.

7. Procédé selon la revendication 6, selon lequel ladite polyoléfine est choisie dans le groupe comprenant des polyéthylènes et des polypropylènes.

8. Procédé selon la revendication 1, selon lequel ladite couche formant barrière est une couche formant barrière organique.

9. Procédé selon la revendication 8, selon lequel ladite couche formant barrière organique est une matière thermoplastique.

10. Procédé selon la revendication 9, selon lequel ladite matière thermoplastique est choisie dans le groupe comprenant des polyamides, des polyesters, des polymères et copolymères d'alcool vinylique, des polymères d'acétate de vinyle, des polymères et des copolymères de chlorure de vinyle, des polymères et des copolymères de chlorure de vinylidène, et des polymères de cristal liquide.

11. Procédé selon la revendication 8, selon lequel ladite couche formant barrière organique possède une épaisseur d'environ 5 micromètres à environ 50 micromètres.

12. Procédé selon l'une quelconque des revendications précédentes, selon lequel les structures, qui sont post-formées dans au moins une partie des parois, incluent des poignées.

13. Procédé selon l'une quelconque des revendications précédentes, selon lequel les structures, qui sont post-formées dans au moins une partie des parois, incluent des motifs décoratifs.
